# EUROPEAN PATENT SPECIFICATION

(11) **EP 2 574 773 B1**
(45) Date of publication and mention of the grant of the patent: **29.07.2015**
(21) Application number: 12186134.8
(22) Date of filing: 26.09.2012
(51) Int. Cl.: F03D 1/00, F03D 1/06

(54) **Wind turbine installation method and wind turbine assembly suitable for use in said method**
Windturbineninstallationsverfahren und zur Verwendung mit dem Verfahren geeignete Windturbinenbaugruppe
Procédé d'installation de turbine éolienne et assemblage d'éolienne approprié à l'utilisation dudit procédé

(30) Priority: 29.09.2011 NL 2007504
(43) Date of publication of application: 03.04.2013
(73) Proprietor: Seaway Heavy Lifting Engineering B.V., 2719 ER Zoetermeer (NL)
(72) Inventor: van der Kooi, Reinder, 2681 RL Monster (NL)
(74) Representative: Nederlandsch Octrooibureau

(56) References cited:
- RU-C1- 2 009 372
- US-A1- 2004 169 376
- US-A1- 2007 243 063
- US-A1- 2010 313 417
- US-A1- 2011 139 056

## Description

### Field of the invention

The invention relates to a wind turbine installation method for installing an offshore wind turbine comprising a column supported on a foundation, a generator supported on the column having a drive axis and a hub attached to said drive axis, and at least three rotor blades connected to the hub for driving the axis in rotation. The present invention also relates to a wind turbine assembly suitable for use in said method.

### Background

From WO2009/068038 a wind turbine installation method is known in which at an on-shore construction site, two wind turbine rotor blades are connected to the hub of a nacelle in a so-called "bunny ears" configuration and one blade is temporarily fixed in a vertical orientation to the upper tower section. Several upper tower sections, each carrying a vertical rotor blade, are placed vertically on a barge and are, together with the corresponding nacelles, transported to the offshore installation site. There the upper tower sections are lifted by means of a jack-up installation and are secured to a pre-installed foundation. Next, the nacelle with the two rotor blades in bunny ear configuration is lifted from the barge and is secured on top of upper tower part. Finally, the vertical blade is moved vertically upwards along the tower, for instance along a rail system, to be aligned with a flange on the hub of the nacelle and is fixed to this flange, where after the temporary connection of the third rotor blade to the tower is released.

The known system provides increased installation speed and avoids the need for attaching the rotor blades to the nacelle at the installation site, which may be subject to the disturbing effects of waves and wind. Transporting and handling of the nacelle with the two rotor blades attached in bunny ear configuration is relatively elaborate, as the blades require a large available deck space and care should be taken during installation to avoid impact of the blades with other blades or with the tower sections on the barge or the pre-installed foundation. Furthermore, the alignment and connection step of the third blade to the hub requires precise positioning and corresponding calm weather conditions.

It is an object of the present invention to provide a wind turbine installation method and assembly for use in said method with which rapid an accurate installation can be achieved. It is a further object of the present invention to provide a wind turbine installation method with a reduced sensitivity for weather conditions.

### Summary of the invention

Hereto the method according to the invention is characterised by the steps of:
- on shore attaching the generator to a column upper part, fixing one rotor blade to the hub in an operational position and connecting two rotor blades to the hub via a hinge connection in a transport position so that they extend substantially in the same direction as the fixed rotor blade,
- lifting the assembly of column upper part, generator and rotor blades onto a vessel via a lifting device attached at the top of the assembly,
- sailing the vessel to a foundation at an offshore installation site,
- lifting the assembly, and attaching the column upper part to the foundation,
- hinging a first hinging rotor blade into a substantially vertical state by rotation of the hub, and fixing the first rotor blade in its operational position to the hub in the vertical state, and
- hinging the second hinging rotor blade into a substantially vertical state by rotation of the hub, and fixing the second rotor blade in its operational position to the hub in the vertical state.

By attaching the three rotor blades to the hub at the on-shore construction site, and hinging two rotor blades into a transport position, an accurate alignment and attaching under controlled conditions is possible. By placing the three rotor blades to extend substantially in the same direction along the column upper part, a compact assembly is achieved which allows efficient storage and transport to the installation site on a barge, and which allows accurate and safe lifting and connection to a wind turbine foundation at the offshore installation site. After attaching the generator, or nacelle, to the foundation, the two hinging rotor blades may be hinged into their operational state. By rotating the hub such that the two hinging rotor blades are placed in succession in a vertically downward orientation, the hinging connections of these rotor blades to the hub can in that operational position be easily locked, even at higher sea states.

In one embodiment, the hinging rotor blades may be locked in their transport position to the column upper part, prior to lifting of the assembly. Locking of the rotor blades keeps these blades securely fixed in a transport position in which they can be supported on the column upper part and prevents uncontrolled hinge movements of the hinging rotor blades during transport and attachment of the column upper part to the foundation at the offshore installation site. After attachment of the column upper part, the hinging rotor blades may be unlocked in succession, prior to hinging them into their operational position.

A number of assemblies consisting of column upper parts, generators and rotor blades may be transported on a barge in a horizontal orientation. In a preferred embodiment however, the column upper part is longer than the length of the blades, such that the pre-assembled upper column parts can be placed on a transport barge in a vertical orientation whereby that at the installation site, these column upper parts can be easily lifted and placed on the foundation. The length of the rotor blades may be 30 m or more, the height of the column upper part being for instance 31 m or higher, the total height of the wind turbine above water level being for instance 50 m or more.

Each hinging rotor blade comprises a flange, the hub comprising a corresponding flange, attached to the rotor blade flange via a hinge, each flange comprising a number of holes for receiving bolts, which holes can be superimposed by hinging the flanges onto one another along the hinge.

Preferably the turbine upper assembly comprising the tower upper section, the generator attached to the upper section, and the at least three rotor blades being connected to the hub is provided with a lifting member at sides or at the top of the generator or at the upper column section, by which the assembly at the installation site can be lifted by means of a crane vessel. The lifting member may comprise an external lifting tool based on friction, a flange lifting tool with jaws gripping underneath a flange on the assembly or any other suitable connector such as an eye for engaging with a complementary connector, for instance a hook of the crane vessel or a connection tube.

### Brief description of the drawings

An embodiment of a method in accordance with the invention will by way of nonlimiting example be described in detail with reference to the accompanying drawings. In the drawings:
Fig. 1 shows a wind turbine upper assembly according to the invention having an upper column part, a nacelle and three rotor blades in a vertical transport configuration,
Fig. 2 shows lifting of the assembly of fig 1 at an offshore installation site using a crane vessel,
Fig. 3 shows the assembly attached to the wind turbine foundation prior to placing the two rotor blades in their operational position, and
Figs. 4 and 5 show the steps of deploying the rotor blades into their operational state.

### Detailed description of the invention

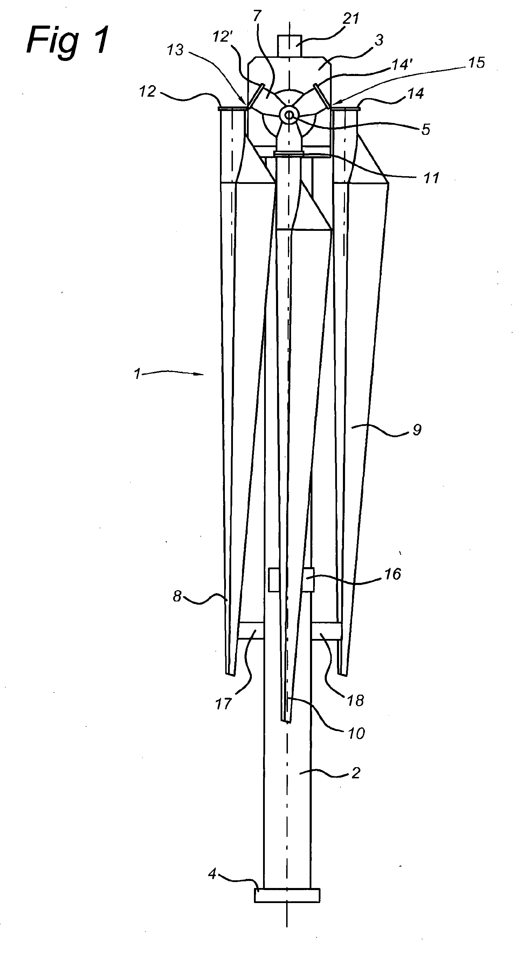

Fig. 1 shows a wind turbine upper assembly 1 according to the invention having a column upper part 2 and a generator or nacelle 3 attached to a top end of the column upper part 2. The column part 2 comprises at its lower end a flange 4 for connection to a pre-installed offshore wind turbine foundation. Instead of using a flange 4, it is possible that the column part 2 is connected to the foundation via other types of connection, such as via a grouted connection.

A drive axis 5 of the nacelle 3 extends perpendicular to the plane of the drawing, for driving the generator and is at its end provided with a hub 7. Three rotor blades 8,9,10 are connected to the hub 7. The rotor blade 10 is fixedly attached to the hub 7 via flanges 11. A releasable transport locking device 12 secures the rotor blade 10 to the column part 2 during transport. The rotor blades 8 and 9 each comprise flanges 12, 14 that are attached to respective corresponding flanges 12', 14' on the hub 7 via hinges 13, 15. The rotor blades 8,9 are fixed in the transport position by releasable locking members 17, 18 engaging with the column part 2 and maintaining the rotor blades in a defined transport position.

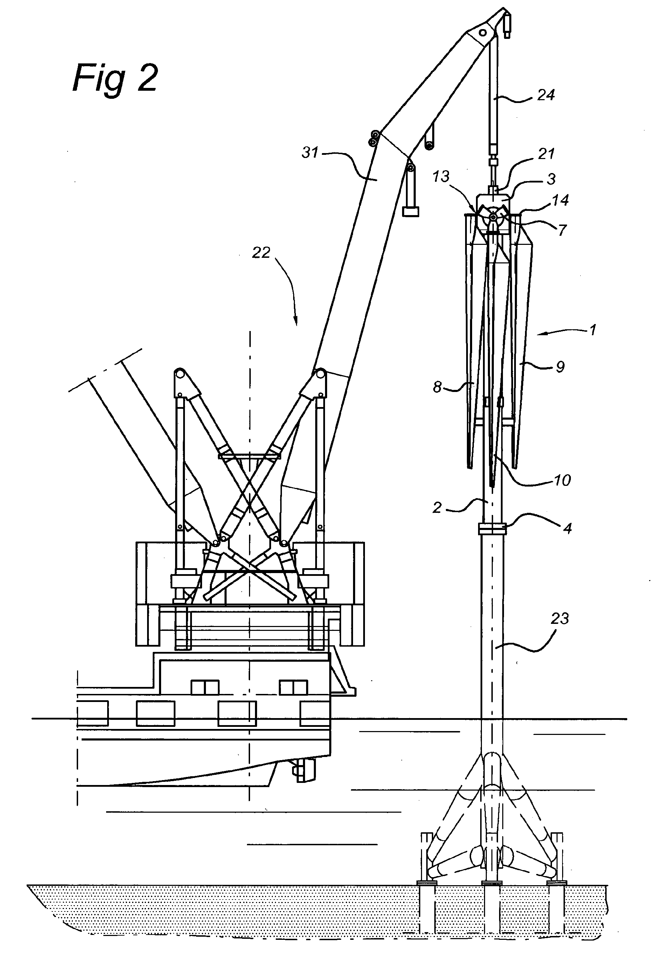

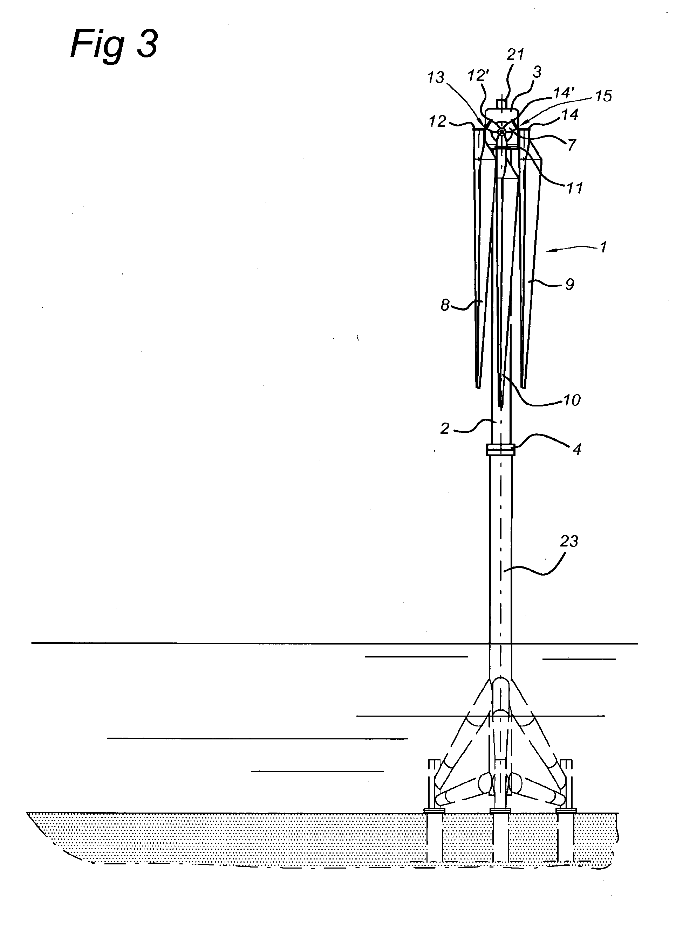

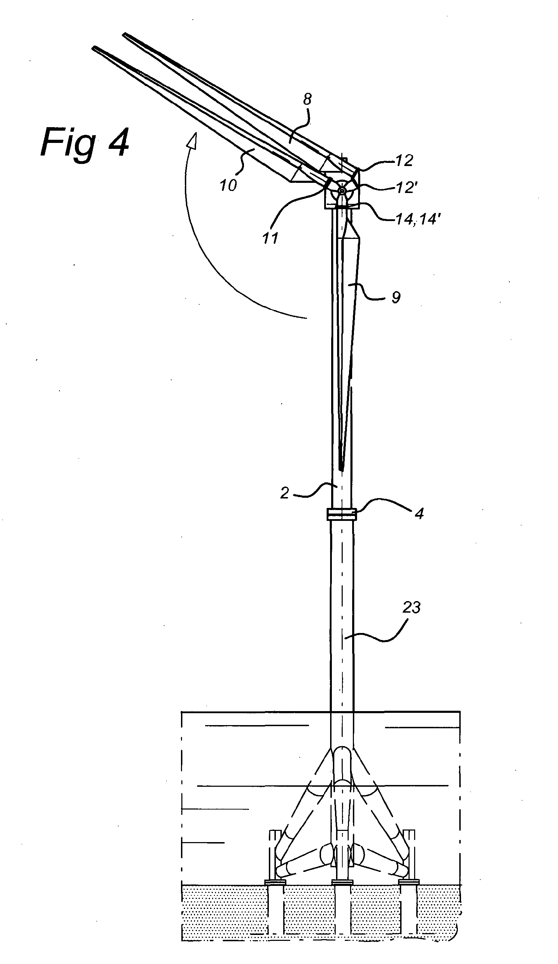

At the top of the assembly 1, for instance at the top of the nacelle 3, a connector 21 for attaching to a lifting device of a crane is provided. The assembly 1 can be lifted via the connector 21 and can be placed on a barge in a vertical orientation, resting on the flange 4 while being transported to an installation site. At the installation site, a crane 31 of crane vessel 22 (see fig. 2) lifts the assembly 1 off the barge, the connector 21 being attached to a lifting cable 24. The crane vessel 22 can be a separate vessel or can be the same vessel transporting the assemblies to the installation site. The crane places the flange 4 onto a foundation 23. After fixing the flange 4 to the foundation 23, the locking members 16, 17 and 18 of the rotor blades 8,9 and 10 may be released and the lifting cable 24 is released from the connector 21, such as shown in fig. 3. Then the hub 7 is rotated around the drive axis 5 in a clockwise direction, such that the blade 9 depends from the hub 5 in a vertically downward orientation, as shown in fig. 4. In this position, the flanges 14,14' are superimposed and aligned and bolts can be placed though the aligned holes in the flanges.

Rotation of the hub 7 can be effected by means of a temporary generator that powers the nacelle which temporary generator can be placed in the column upper section and is removed from the wind turbine after installation.

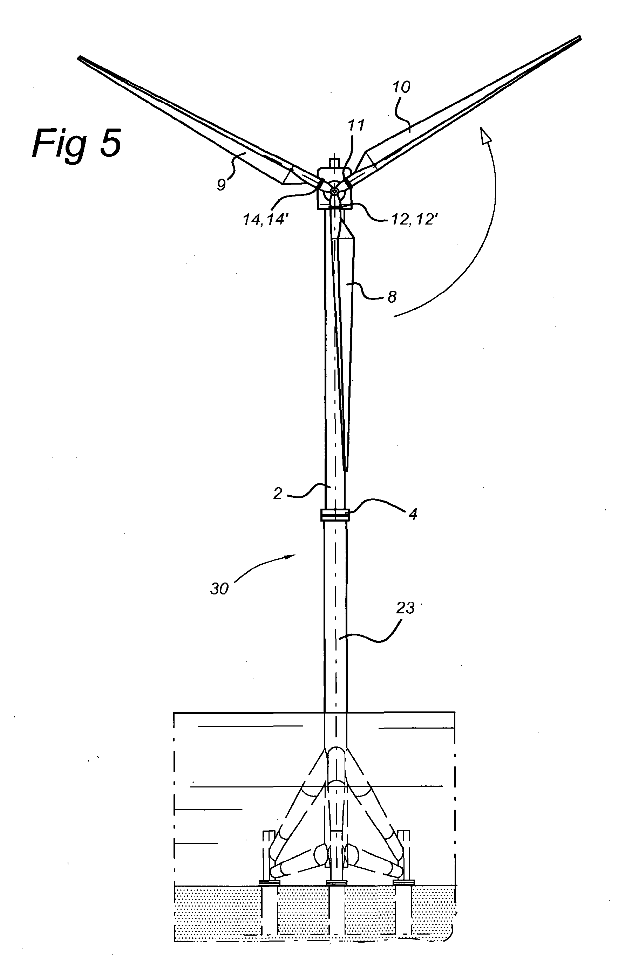

With the rotor blades 9 and 10 in the operational position, the hub 5 is then rotated counter clockwise (see fig. 5) such that the rotor blade 8 extends vertically downward and the flanges 12,12'are superimposed. After connecting the flanges 12, 12', the rotor blade 8 is in its operational state and the installation of the wind turbine 30 is completed.

## Claims

1. Method of installing an offshore wind turbine (30) comprising a column supported on a foundation (23), a generator (3) supported on the column having a drive axis (5) and a hub (7) attached to said drive axis, and at least three rotor blades (8,9,10) connected to the hub (7) for driving the axis in rotation, **characterised by** the steps of:
- on shore attaching the generator (3) to a column upper part (2) and fixing one rotor blade (10) to the hub (7) in an operational position and connecting two rotor blades (8,9) to the hub (7) via a hinge connection (13,15) in a transport position so that they extend substantially in the same direction as the fixed rotor blade (10),
- lifting the assembly (1) of column upper part (2), generator (3) and rotor blades (8,9,10) onto a vessel via a lifting device attached at the top of the assembly (1),
- sailing the vessel to a foundation (23) at an offshore installation site,
- lifting the assembly (1), and attaching the column upper part (2) to the foundation (23),
- hinging a first hinging rotor blade (9) into a substantially vertical state by rotation of the hub (7) and fixing the rotor blade (9) in its operational position to the hub (7) in the vertical state, and
- hinging the second hinging rotor blade (8) into a substantially vertical state by rotation of the hub (7) and fixing the rotor blade (8) in its operational position to the hub (7) in the vertical state.

2. Method according to claim 1, comprising the step of locking the hinging rotor blades (8,9) in their transport position to the column upper part (2), prior to lifting of the assembly (1) and unlocking of the rotor blades (8,9), prior to hinging them into their operational position.

3. Method according to claim 1 or 2, wherein the column upper part (2) is longer than the length of the rotor blades (8,9,10), the upper column part (2) being transported on the vessel in a vertical orientation.

4. Method according to claim 1,2 or 3, wherein the hub (7) upon fixing of the first hinging rotor blade (9) in its operational position is rotated in a first direction, and upon fixing of the second hinging rotor blade (8) in its operational position, is rotated in a second direction, opposite to the first direction.

5. Method according to any of the preceding claims, wherein each hinging rotor blade (8,9) comprises a flange (12,14), the hub (7) comprising corresponding flanges (12', 14'), attached to a respective rotor blade flange (12,14) via a hinge (13,15), each flange (12,13', 14,14') comprising a number of holes for receiving bolts, which holes can be superimposed by hinging the flanges (12,12';14,14') onto one another along the corresponding hinges (13,15).

6. Wind turbine upper assembly (1) comprising a column upper section (2), a generator (3) attached to the upper section (2), the generator having an axis (5) and a hub (7) connected to the axis, at least three rotor blades (8,9,10) being connected to the hub (7), one rotor blade (10) extending along the column upper section (2) and two rotor blades (8,9) being hingingly attached to the hub (7) so as to extend substantially alongside the first rotor blade (10), wherein each hinging rotor blade (8,9) is connected to the hub (7) via a flange (12,14), **characterized by** the flanges (12,14) of the hinging rotor blades being attached to a corresponding flange (12', 14') of the hub (7) via a hinge (13,15), each flange (12,12', 14,14') being provided with connecting holes which holes can be superimposed by hinging the flanges around their respective hinge.

7. Wind turbine according to claim 6, the upper assembly comprising releasable locking means (17,18) for locking the hinged rotor blades (8,9) in a transport position and for releasing the hinged rotor blades for hinging the blades relative to the hub 97) into an operational position.

8. Wind turbine upper assembly (1) according to claim 6 or 7, comprising a lifting member (21) on the generator (3) or on the column upper section (2).

9. Wind turbine (30) comprising a foundation (23) and connected thereto a wind turbine upper assembly (1) according to any of claims 6-8.

## Patentansprüche

1. Verfahren zum Installieren einer Offshore-Windturbine (30), umfassend eine auf einem Fundament (23) getragene Säule, einen auf der Säule getragenen Generator (3), der eine Antriebsachse (5) und eine an der Antriebsachse angebrachte Nabe (7) aufweist, und zumindest drei mit der Nabe (7) verbundene Rotorblätter (8, 9, 10), um die Achse in Drehung zu versetzen,
**gekennzeichnet durch** die Schritte:
- an Land erfolgendes Anbringen des Generators (3) an einem Säulenoberteil (2) und Fixieren eines Rotorblattes (10) an der Nabe (7) in einer Betriebsposition und Verbinden von zwei Rotorblättern (8, 9) mit der Nabe (7) mittels einer Gelenkverbindung (13, 15) in einer Transportposition, derart, dass sie sich im Wesentlichen in dieselbe Richtung erstrecken wie das fixierte Rotorblatt (10),
- Heben der Baugruppe (1) aus Säulenoberteil (2), Generator (3) und Rotorblättern (8, 9, 10) auf ein Schiff mittels einer am oberen Ende der Baugruppe (1) angebrachten Hebevorrichtung,
- Fahren des Schiffes zu einem Fundament (23) an einer Offshore-Installationsstelle,
- Heben der Baugruppe (1) und Anbringen des Säulenoberteiles (2) an dem Fundament (23),
- Schwenken eines ersten gelenkigen Rotorblattes (9) in einen im Wesentlichen vertikalen Zustand **durch** Drehen der Nabe (7) und Fixieren des Rotorblattes (9) in dessen Betriebsposition an der Nabe (7) in dem vertikalen Zustand, und
- Schwenken des zweiten gelenkigen Rotorblattes (8) in einen im Wesentlichen vertikalen Zustand **durch** Drehen der Nabe (7) und Fixieren des Rotorblattes (8) in dessen Betriebsposition an der Nabe (7) in dem vertikalen Zustand.

2. Verfahren nach Anspruch 1, umfassend den Schritt des Verriegelns der gelenkigen Rotorblätter (8, 9) in ihrer Transportposition an dem Säulenoberteil (2) vor dem Anheben der Baugruppe (1) und Entriegeln der Rotorblätter (8, 9), bevor diese in ihre Betriebsposition geschwenkt werden.

3. Verfahren nach Anspruch 1 oder 2, wobei das Säulenoberteil (2) länger ist als die Länge der Rotorblätter (8, 9, 10), wobei das Säulenoberteil (2) auf dem Schiff in einer vertikalen Ausrichtung transportiert wird.

4. Verfahren nach Anspruch 1, 2 oder 3, wobei die Nabe (7) beim Fixieren des ersten gelenkigen Rotorblattes (9) in dessen Betriebsposition in eine erste Richtung gedreht wird, und beim Fixieren des zweiten gelenkigen Rotorblattes (8) in dessen Betriebsposition in eine zweite Richtung entgegengesetzt zu der ersten Richtung gedreht wird.

5. Verfahren nach einem der vorhergehenden Ansprüche, wobei jedes gelenkige Rotorblatt (8, 9) einen Flansch (12, 14) umfasst, wobei die Nabe (7) entsprechende Flansche (12', 14') umfasst, die mittels eines Gelenks (13, 15) an einem jeweiligen Rotorblattflansch (12, 14) angebracht sind, wobei jeder Flansch (12, 12', 14, 14') für die Aufnahme von Bolzen eine Anzahl von Löchern umfasst, die durch Schwenken der Flansche (12, 12', 14, 14') entlang der entsprechenden Gelenke (13, 15) übereinander gelegt werden können.

6. Windturbinen-Oberbaugruppe (1), umfassend ein Säulenoberteil (2), einen Generator (3), der an dem Oberteil (2) angebracht ist, wobei der Generator eine Achse (5) und eine mit der Achse verbundene Nabe (7) aufweist, zumindest drei mit der Nabe (7) verbundene Rotorblätter (8, 9, 10), wobei ein Rotorblatt (10) sich längs des Säulenoberteils (2) erstreckt und zwei Rotorblätter (8, 9) an der Nabe (7) schwenkbar angebracht sind, um sich im Wesentlichen längsseits des ersten Rotorblattes (10) zu erstrecken, wobei jedes gelenkige Rotorblatt (8, 9) mittels eines Flansches (12, 14) mit der Nabe (7) verbunden ist,
**dadurch gekennzeichnet, dass** die Flansche (12, 14) der gelenkigen Rotorblätter mittels eines Gelenks (13, 15) an einem entsprechenden Flansch (12', 14') der Nabe (7) angebracht sind, wobei jeder Flansch (12, 12', 14, 14') mit Verbindungslöchern versehen ist, die durch Schwenken der Flansche um ihr jeweiliges Gelenk übereinander gelegt werden können.

7. Windturbine nach Anspruch 6, wobei die Oberbaugruppe eine lösbare Verriegelungseinrichtung (17, 18) zum Verriegeln der gelenkigen Rotorblätter (8, 9) in einer Transportposition und zum Freigeben der gelenkigen Rotorblätter zum Schwenken der Blätter relativ zu der Nabe (7) in eine Betriebsposition umfasst.

8. Windturbinen-Oberbaugruppe (1) nach Anspruch 6 oder 7, umfassend ein Hebeteil (21) an dem Generator (3) oder an dem Säulenoberteil(2).

9. Windturbine (30), umfassend ein Fundament (23) und eine damit verbundene Windturbinen-Oberbaugruppe (1) nach einem der Ansprüche 6 bis 8.

## Revendications

1. Procédé d'installation d'une éolienne en mer (30), comprenant une colonne supportée sur une fondation (23), un générateur (3) supporté sur la colonne ayant un axe d'entraînement (5) et un moyeu (7) lié audit axe d'entraînement, et au moins trois pales de rotor (8, 9, 10) raccordées au moyeu (7) pour entraîner l'axe en rotation, **caractérisé par** les étapes consistant à :
- lier à terre le générateur (3) à une partie supérieure de colonne (2) et fixer une pale de rotor (10) au moyeu (7) dans une position opérationnelle et raccorder deux pales de rotor (8, 9) au moyeu (7) par l'intermédiaire d'une connexion articulée (13, 15) dans une position de transport afin qu'elles s'étendent sensiblement dans la même direction que la pale de rotor fixe (10),
- soulever l'ensemble (1) de la partie supérieure de colonne (2), du générateur (3) et des pales de rotor (8, 9, 10) jusqu'à un navire par l'intermédiaire d'un dispositif de levage lié au sommet de l'ensemble (1),
- faire naviguer le navire jusqu'à une fondation (23) au niveau d'un site d'installation en mer,
- soulever l'ensemble (1), et lier la partie supérieure de colonne (2) à la fondation (23),
- articuler une première pale de rotor à articulation (9) dans un état sensiblement vertical par rotation du moyeu (7) et fixer la pale de rotor (9) dans sa position opérationnelle sur le moyeu (7) à l'état vertical, et
- articuler la seconde pale de rotor à articulation (8) dans un état sensiblement vertical par rotation du moyeu (7) et fixer la pale de rotor (8) dans sa position opérationnelle sur le moyeu (7) à l'état vertical.

2. Procédé selon la revendication 1, comprenant l'étape consistant à verrouiller les pales de rotor à articulation (8, 9) dans leur position de transport sur la partie supérieure de colonne (2), avant de soulever l'ensemble (1), et à déverrouiller les pales du rotor (8, 9), avant de les articuler dans leur position opérationnelle.

3. Procédé selon la revendication 1 ou 2, dans lequel la partie supérieure de colonne (2) est plus longue que la longueur des pales de rotor (8, 9, 10), la partie supérieure de colonne (2) étant transportée sur le navire dans une orientation verticale.

4. Procédé selon la revendication 1, 2 ou 3, dans lequel le moyeu (7) lors de la fixation de la première pale de rotor à articulation (9) dans sa position opérationnelle est mis en rotation dans une première direction, et lors de la fixation de la seconde pale de rotor à articulation (8) dans sa position opérationnelle, est mis en rotation dans une seconde direction, opposée à la première direction.

5. Procédé selon l'une quelconque des revendications précédentes, dans lequel chaque pale de rotor à articulation (8, 9) comprend une bride (12, 14), le moyeu (7) comprenant des brides (12', 14') correspondantes, liées à une bride de pale de rotor (12, 14) respective par l'intermédiaire d'une charnière (13, 15), chaque bride (12, 13', 14, 14') comprenant un certain nombre de trous pour recevoir des boulons, lesquels trous peuvent être superposés par articulation des brides (12, 12' ; 14, 14') l'une sur l'autre le long des charnières correspondantes (13, 15).

6. Ensemble supérieur d'éolienne (1) comprenant une section supérieure de colonne (2), un générateur (3) lié à la section supérieure (2), le générateur ayant un axe (5) et un moyeu (7) raccordé à l'axe, au moins trois pales de rotor (8, 9, 10) étant raccordées au moyeu (7), une pale de rotor (10) s'étendant le long de la section supérieure de colonne (2) et deux pales de rotor (8, 9) étant liées à l'aide de charnières au moyeu (7) de façon à s'étendre sensiblement le long de la première pale de rotor (10), dans lequel chaque pale de rotor à articulation (8, 9) est raccordée au moyeu (7) par l'intermédiaire d'une bride (12, 14), **caractérisé par** les brides (12, 14) des pales de rotor à articulation fixées à une bride correspondante (12', 14') du moyeu (7) par l'intermédiaire d'une charnière (13, 15), chaque bride (12, 12', 14, 14') étant pourvue de trous de raccordement, lesquels trous peuvent être superposés par articulation des brides autour de leur charnière respective.

7. Éolienne selon la revendication 6, l'ensemble supérieur comprenant des moyens de verrouillage libérable (17, 18) pour verrouiller les pales de rotor articulées (8, 9) dans une position de transport et pour libérer les pales de rotor articulées pour articuler les pales par rapport au moyeu (7) dans une position opérationnelle.

8. Ensemble supérieur d'éolienne (1) selon la revendication 6 ou 7, comprenant un élément de levage (21) sur le générateur (3) ou sur la section supérieure de la colonne (2).

9. Éolienne (30) comprenant une fondation (23) et ensemble supérieur d'éolienne (1) selon l'un quelconque des revendications 6 à 8 y étant raccordé.
